# EUROPEAN PATENT SPECIFICATION

(11) **EP 4 393 681 B1**
(45) Date of publication and mention of the grant of the patent: **04.02.2026**
(21) Application number: 22940502.2
(22) Date of filing: 14.12.2022
(51) Int. Cl.: B29C 64/209, B29C 64/118, B29C 64/295, B33Y 30/00, B33Y 70/00, B33Y 10/00, B29C 64/106

(54) **3D PRINTER HEAD USING LOCAL HEATING METHOD**
3D-DRUCKKOPF MIT VERWENDUNG VON LOKALEM HEIZVERFAHREN
TÊTE D'IMPRIMANTE 3D UTILISANT UNE MÉTHODE DE CHAUFFAGE LOCAL

(30) Priority: 11.11.2022 KR 20220150062
(43) Date of publication of application: 03.07.2024
(73) Proprietor: T&R Biofab Co., Ltd., Siheung-si, Gyeonggi-do 15073 (KR)
(72) Inventor: KIM, In Ho, Seongnam-si, Gyeonggi-do 13487 (KR); SEOK, Dong Won, Seongnam-si, Gyeonggi-do 13487 (KR)
(74) Representative: Caspary, Karsten
(86) International application number: PCT/KR2022/020314
(87) International publication number: WO 2024/101526

(56) References cited:
- WO-A1-2016/025388
- CN-A- 110 154 389
- CN-A- 110 561 740
- CN-U- 205 853 382
- CN-U- 206 394 017
- CN-U- 208 228 287
- CN-U- 209 346 074
- CN-U- 211 091 838
- KR-A- 20170 062 965

## Description

### [Technical Field]

The present disclosure relates to a local heating type three-dimensional (3D) printer head, and more particularly to a local heating type 3D printer head in which a region around a nozzle through which a printing composition is ejected may be locally heated and material deformation may be minimized and deterioration may be prevented or delayed.

### [Description of the Related Art]

3D printing technology refers to the technology of manufacturing three-dimensional structures by stacking printable material compositions in a predetermined pattern using a 3D printer and, in particular, the technology of three-dimensional printing biological tissue using biocompatible printing compositions is defined as 3D bioprinting.

There is a lot of research being conducted using these 3D bioprinting systems to help heal diseases, such as organoids, organ-on-a-chip, and tissue and organ analogies for replacements of animal testing, and the like.

Printing compositions used in 3D bioprinting are based on hydrogels, thermoplastic polymers, and the like, and may include cells or growth factors and the like.

When these 3D bioprinting systems are used to manufacture three-dimensional structures such as organoids, organ-on-a-chip, and tissue and organ analogs for replacements of animal testing, multiple heads that may eject or print both biocompatible printing compositions such as hydrogels and thermoplastic polymer compositions are often used.

In order to perform 3D printing using printing compositions based on hydrogels, thermoplastic polymers, and the like, the printing composition must be maintained in a flowable liquid phase so that it may be ejected within the 3D printer head.

The printing composition comprising these thermoplastic polymers must be maintained at a high temperature inside the 3D printer head where it is ejected or printed so that it remains in a semi-solid state that is a flowable liquid phase inside the 3D printer head, where the temperature difference with the outside causes moisture contained in the outside air to condense on the surface of the 3D printer head or around the head, resulting in condensation.

In addition, when printing thermoplastic synthetic polymer materials using 3D printing technology, the syringe containing the material is heated sufficiently to melt it before printing. When the material is heated for a long time, the high and continuous thermal energy causes the intermolecular bonds of the synthetic polymer material to break, resulting in changes in the material's properties (viscosity change, molecular weight reduction, and the like). These changes in properties may lead to defective products due to differences in the amount of material ejected and matters with smooth material ejection.

CN 110 561 740 A relates to a feeding mechanism including a cylinder body with a melting chamber, a movable piston, a driving mechanism, an electromagnetic valve, a heating element, and a metal nozzle. The heating element melts the printing material within the melting chamber, while the piston, controlled by the driving mechanism, ensures a controlled discharge of molten liquid through the metal nozzle. The design minimizes air intrusion, reduces air content in the melting chamber, and ensures a stable and uniform material supply, thereby improving the quality of the formed products.

WO 2016/025388 A1 discloses a method for manufacturing a bioactive implant involving the steps of creating a mixture of a bioactive agent and a setting agent that can transition from a flowable to a solid state, converting the mixture into a flowable state; and solidifying the mixture into the desired implant shape.

CN 110 154 389 A discloses 3D printing equipment. It includes a preheating assembly, storage assembly, interface assembly, refrigerating assembly, and control assembly. The equipment is capable of constanttemperature printing, comprises a fully sealed and hygienic design, and built-in storage functionality.

### [References in related art]

(Patent reference 1): Korean Patent Publication No. 10-1795559
(Patent reference 2): Korean Patent Publication No. 10-1975200
(Patent reference 3): Chinese Patent Publication No. 110 561 740
(Patent reference 4): International Patent Publication No. 2016/025388
(Patent reference 5): Chinese Patent Publication No. 110 154 389

### [Disclosure of the Invention]

### [Technical Goals]

Therefore, the present disclosure is designed to solve the above objectives, and the purpose is to provide a local heating type 3D printer head that may prevent deformation of the material by exposing the material to heat for a short period of time by locally heating around the ejection part of the material without heating the entire syringe.

### [Technical Solutions]

A local heating type 3D printer head according to embodiment of the present disclosure for achieving the above objectives includes: a head frame in the form of a plate; a syringe provided on said head frame to receive a printing composition and to eject the printing composition through a lower nozzle part; and a heating part provided on an outer peripheral surface of the lower part of the syringe to locally heat the area around the nozzle part. The bottom of said heating part further includes a heating part adjustment plate installed to wrap around an outer peripheral surface of the nozzle part to secure a minimum heating area.

The top of the heating part may further include a heating part adjustment plate that covers the bottom of the syringe and the heating part to ensure a minimum heating area.

The upper part of the heating part adjustment plate wraps around the outer peripheral surface of the heating part and the syringe.

The thickness of the heating part adjustment plate may be formed to be less than or equal to the thickness of the heating part.

An upper front face of said head frame may be provided with a syringe fixing part for fixing the syringe.

The middle end of the syringe may be provided with a heat sink part that dissipates high heat to prevent the syringe from overheating.

A thermoplastic polymer may be used in said printing composition.

The heating part may include a heating block provided on an outer peripheral surface of the lower part of the syringe, and a plurality of cartridge heaters provided inside the heating block to transfer heat for heating.

Said cartridge heaters may be located at the same point on either side of the syringe.

The 3D printer head may further include a temperature measurement part installed at a side of the heating part to measure the temperature of the syringe.

### [Effects]

As described above, according to the local heating type 3D printer head according to the present disclosure, by providing a heating part at the lower part of the syringe where the printing composition is received, it is possible to locally heat the area around the nozzle part where the printing composition is ejected so that the material may be maintained in its original state without deformation, thereby maximizing the quality of the printed product.

### [Brief Description of the Drawings]

Figure 1 is a perspective view of a local heating type 3D printer head according to the present disclosure.
Figure 2 is an exploded view of a local heating type 3D printer head according to the present disclosure.
Figure 3 is a perspective view of an internal configuration of a local heating type 3D printer head according to the present disclosure.
Figure 4 is a front view of a local heating type 3D printer head according to the present disclosure.
Figure 5 is a cutaway view of a local heating type 3D printer head according to the present disclosure.

### [Detailed Description for Carrying Out the Invention]

The present disclosure is subject to various modifications and may have many example embodiments, certain of which are illustrated in the drawings and further described in the detailed description. However, this is not intended to limit the disclosure to any particular example embodiment and should be understood to include all modifications, equivalents, or substitutions that are within the spirit and scope of the disclosure.

In the drawings, example embodiments of the disclosure are not limited to the particular forms shown and are exaggerated for clarity. Certain terms are used herein for the purpose of describing the disclosure and are not intended to limit the meaning or to limit the scope of the claims of the disclosure.

As used herein, the phrase "and/or" is used to mean including at least one of the components listed before or after. In addition, the expression "connected to/combined with" is used to include being directly connected to another component or being indirectly connected through another component. In this specification, the singular includes the plural unless the context otherwise mentions. In addition, components, steps, operations, and elements referred to as "including" or "comprising" as used in the specification imply the presence or addition of one or more other components, steps, operations, and elements.

In the description of the example embodiments, references to each layer, region, pattern, or structure being formed "on" or "under" the substrate, respective sides, regions, pads, or patterns include both being formed directly or by interposing other layers. The reference to "on"/"over" or "under"/"below" each layer is described with reference to the drawings.

Hereinafter, example embodiments of the present disclosure will be described in detail with reference to the accompanying drawings.

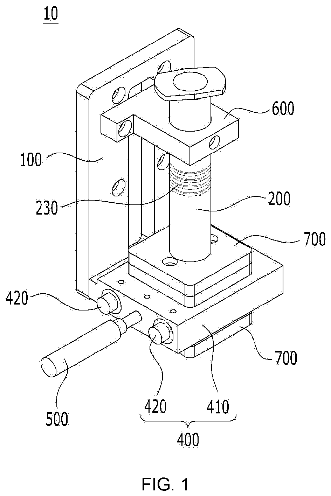

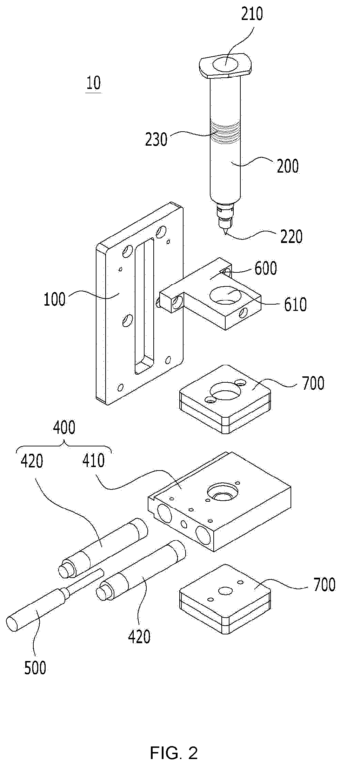

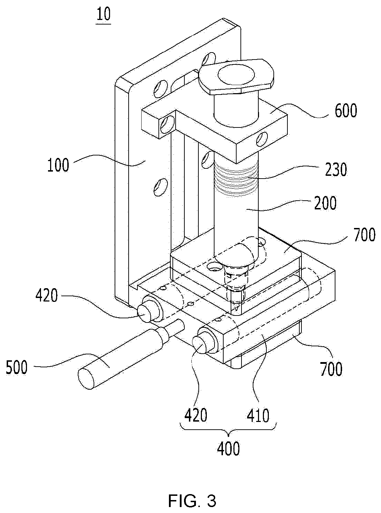

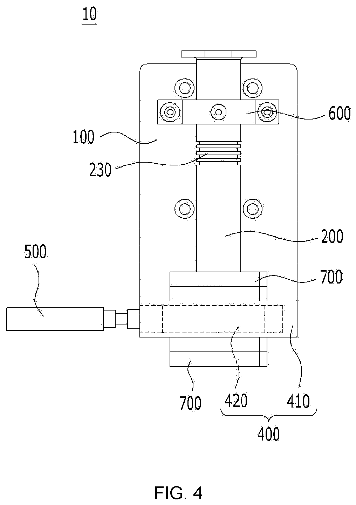

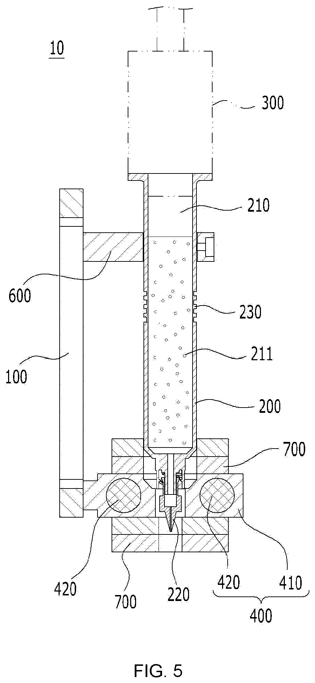

Figure 1 is a perspective view of a local heating type 3D printer head according to the present disclosure; Figure 2 is an exploded view of a local heating type 3D printer head according to the present disclosure; Figure 3 is a perspective view of an internal configuration of a local heating type 3D printer head according to the present disclosure; Figure 4 is a front view of a local heating type 3D printer head according to the present disclosure; and Figure 5 is a cutaway view of a local heating type 3D printer head according to the present disclosure.

As shown in FIGS. 1 to 5, a local heating type 3D printer head 1 according to the present disclosure may eject a printing composition while being moved by a drive device and a control device of a 3D printer. The multi-3D printer head 10 may include a head frame 100, a syringe 200 for ejecting a printing composition 211, a pressure supply part 300 to enable ejection of the printing composition 211, a heating part 400 to heat the syringe 200, and a temperature measurement part 500.

Said head frame 100 may be formed in the form of a plate. The upper front face of the head frame 100 may be provided with a syringe fixing part 600 that allows the syringe 200 to be fixed. In this case, a recess 610 may be formed in the center of said syringe fixing part 600 into which the syringe 200 is inserted. The syringe 200 is secured to the head frame 100 with a syringe fixing part 600, and may include a receiving part 210 in which the printing composition 211 is received, and a nozzle part 220 through which the printing composition 211 received in the receiving part 210 is ejected.

The printing composition 211 may include a thermoplastic polymer, in which the thermoplastic polymer is not particularly limited but is a polymer capable of having fluid-like flowability upon heating, for example it may include one or more selected from the group consisting of 3D printable materials, such as a lactide, caprolactone, glycolide, dioxanone, propylene, ethylene, vinylchloride, butadiene, methyl methacrylate, acrylic acid, 2-hydroxyethlymethacrylate, carbonate, and polyethylene terephthalate, ABS (acrylonitrile butadiene styrene), PCL (polycaprolactone), ASA (acrylonitrile-styrene-acrylate), SAN (Stryrene-Acrylonitrile copolymer), PS (Polystyrene), PPSF/PPSU (Polyphenylsulfone), Polyetherimide, PLA (Polylactic acid), PDL (Poly-d-lysine).

Anywhere other than the lower part of the syringe 200, the syringe 200 may be provided with a heat sink part 230 that dissipates high heat to prevent the syringe 200 from overheating.

The pressure supply part 300 is connected to the upper part of the syringe 200 and may supply pressure into the syringe 200 to eject the printing composition 211 through the nozzle part 220.

The heating part 400 is provided on the outer peripheral surface of the lower part of the syringe 200 to locally heat the area around the nozzle part 220. Further, the heating part 400 may be provided with a heating block 410 provided on the outer peripheral surface of the lower part of the syringe 200, and may be provided with a cartridge heater 420 for heating by transferring heat to the heating block 410.

The heating block 410 is provided by wrapping around the lower part of the syringe 200, and heats the printing composition 211 ejected into the nozzle part 220 to locally heat the periphery of the nozzle part 220 through which the printing composition 211 is ejected. In this case, the heating block 410 is preferably made of an aluminum material having excellent thermal conductivity.

Said cartridge heaters 420 may be provided in plurality within the heating block 410. Preferably, the cartridge heaters 420 are located at the same point on both sides of the syringe 200. In this case, the cartridge heaters 420 may be connected to an external thermostatic controller (not shown) for controlling the temperature of the syringe 200 and the heating block 410.

Said temperature measurement part 500 may be provided at a side portion of the heating part 400 to measure the temperature of the syringe 200 or the heating block 410. The temperature measurement part 500 may include a temperature sensor and may be coupled to an external thermostatic controller (not shown) for controlling the temperature of the syringe 200 and the heating block 410.

Said heating part adjustment plate 700 is removably disposed on top of the heating part 400 and covers the bottom of the syringe 200 and the heating part 400 to ensure a minimum heating area. The heating part adjustment plate 700 may be sized according to the heating area of the heating part 400.

In addition, the heating part adjustment plate 700 may further be removably attached to the bottom of the heating part 400. The heating part adjustment plate 700 attached to the bottom of the heating part 400 is installed to wrap around the outer peripheral surface of the nozzle part 220. In other words, by providing the heating part adjustment plate 700 at the top or bottom of the heating part 400, the syringe 200 and the nozzle part 220 may be wrapped and heated so that the printing composition 211 received in the syringe 200 may be ejected smoothly without solidification.

Meanwhile, the thickness of the heating part adjustment plate 700 may be formed to be the same or smaller than the heating part 400.

The working state of the local heating type 3D printer head of the present disclosure including the above structure is as follows.

The printing composition 211 received in the receiving part 210 of the syringe 200 may be ejected through the nozzle part 220 at the lower part of the syringe 200 to mold a predetermined three-dimensional biological structure. At this time, when the printing composition 211 is ejected through the nozzle part 220, a heating part 400 is provided around the nozzle part 220 so that the area around the nozzle part 220 may be locally heated by heat generated by the heating block 410 and the cartridge heater 420.

As such, the heating part 400 is provided at the nozzle part 220 at the lower part of the syringe 200 to heat the area around the nozzle part 220 so that the printing composition 211 remains undeformed and intact with localized heating, allowing for smooth molding of the three-dimensional biological structure. Then, the area around the nozzle part 220 is heated by the heating part 400, and the printing composition 211 may be ejected through the nozzle part 220 by operation of the pressure supply part 300. Furthermore, the temperature of the syringe 200 and the heating block 410 may be measured in real time through the temperature measurement part 500 to maintain the heating temperature of the heating part 400 appropriately so that the printing composition 211 may be ejected smoothly.

In addition, by removably providing the heating part adjustment plate 700 while wrapping around the outside of the heating part 400, the heat generated by the heating part 400 may be transferred to the syringe 200 and the nozzle part 220 as much as possible without escaping to the outside, so that the printing composition 211 may be ejected smoothly without solidifying.

In the above detailed description of the disclosure, only particular example embodiments thereof have been described. However, the disclosure should not be understood to be limited to the special forms mentioned in the detailed description, but rather to include all variations within the scope of the appended claims.

In other words, the disclosure is not limited to the specific example embodiments and descriptions set forth above, and various modifications may be made by one having ordinary skill in the art to which the disclosure belongs without departing from the scope of protection of the claims.

### [Explanation of symbols].

- 10:: 3D printer head
- 100:: Head frame
- 200:: Syringe
- 210:: Receiving part
- 211:: Printing composition
- 220:: Nozzle part
- 230:: Heat sink part
- 300:: Pressure supply part
- 400:: Heating part
- 410:: Heating block
- 420:: Cartridge heater
- 500:: Temperature measurement part
- 600:: Syringe fixing part
- 610:: Recess
- 700:: Heating part adjustment plate

## Claims

1. A local heating type three-dimensional (3D) printer head (10), the local heating type 3D printer comprises:
a head frame (100);
a syringe (200) provided on the head frame (100) to receive a printing composition (211) and to eject the printing composition (211) through a lower nozzle part (220); and
a heating part (400) provided on an outer peripheral surface of the lower part of the syringe (200) to locally heat the area around the nozzle part (220);
**characterized in that** the bottom of the heating part (400) further comprises a heating part adjustment plate (700) installed to wrap around an outer peripheral surface of a nozzle part (220) to secure a minimum heating area.

2. The local heating type 3D printer head (10) of claim 1, wherein the top of the heating part (400) further comprises a heating part adjustment plate (700) that covers a bottom of the syringe (200) and the heating part (400) to ensure a minimum heating area.

3. The local heating type 3D printer head (10) of claim 2, wherein the heating part adjustment plate (700) is removably disposed on top of the heating part (400), wherein the heating part adjustment plate (700) wraps around the outer peripheral surface of the syringe (200) and the heating part (400).

4. The local heating type 3D printer head (10) of claim 2, wherein the thickness of the heating part adjustment plate (700) is formed to be less than or equal to the thickness of the heating part (400).

5. The local heating type 3D printer head (10) of claim 1, wherein an upper front face of the head frame (100) is provided with a syringe fixing part (600) for fixing the syringe (200).

6. The local heating type 3D printer head (10) of claim 1, wherein anywhere other than the lower part of the syringe (200), the syringe (200) is provided with a heat sink part (230) that dissipates high heat to prevent the syringe (200) from overheating.

7. The local heating type 3D printer head (10) of claim 1, wherein the local heating type 3D printer head (10) is configured to use a thermoplastic polymer in the printing composition (211).

8. The local heating type 3D printer head (10) of claim 1, wherein the heating part (400) comprises:
a heating block (410) provided on an outer peripheral surface of the lower part of the syringe (200); and
a plurality of cartridge heaters (420) provided inside the heating block (410) to transfer heat for heating the syringe (200).

9. The local heating type 3D printer head (10) of claim 8, wherein the cartridge heaters (420) are located at the same point on either side of the syringe (200).

10. The local heating type 3D printer head (10) of claim 1, further comprises a temperature measurement part (500) installed at a side of the heating part (400) to measure the temperature of the syringe (200).

## Patentansprüche

1. Lokalerwärmungstyp-3D-Druckkopf (10), wobei der Lokalerwärmungstyp-3D-Druckkopf Folgendes aufweist:
einen Kopfrahmen (100);
eine Spritze (200), die am Kopfrahmen (100) vorgesehen ist, um eine Druckzusammensetzung (211) aufzunehmen und die Druckzusammensetzung (211) durch einen unteren Düsenabschnitt (220) auszugeben; und
ein Heizelement (400), das an einer äußeren Umfangsfläche des unteren Abschnitts der Spritze (200) vorgesehen ist, um den Bereich um den Düsenabschnitt (220) lokal zu erhitzen;
**dadurch gekennzeichnet, dass**
der Boden des Heizelements (400) des Weiteren eine Heizzoneneinstellplatte (700) aufweist, die so installiert ist, dass sie sich um eine äußere Umfangsfläche eines Düsenabschnitts (220) legt, um einen minimalen Heizbereich sicherzustellen.

2. Lokalerwärmungstyp-3D-Druckkopf (10) nach Anspruch 1, wobei die Oberseite des Heizelements (400) des Weiteren eine Heizzoneneinstellplatte (700) aufweist, die einen Boden der Spritze (200) und das Heizelement (400) abdeckt, um einen minimalen Heizbereich sicherzustellen.

3. Lokalerwärmungstyp-3D-Druckkopf (10) nach Anspruch 2, wobei die Heizzoneneinstellplatte (700) lösbar oberhalb des Heizelements (400) angeordnet ist, wobei die Heizzoneneinstellplatte (700) sich um die äußere Umfangsfläche der Spritze (200) und das Heizelement (400) legt.

4. Lokalerwärmungstyp-3D-Druckkopf (10) nach Anspruch 2, wobei die Dicke der Heizzoneneinstellplatte (700) so ausgebildet ist, dass sie kleiner oder gleich der Dicke des Heizelements (400) ist.

5. Lokalerwärmungstyp-3D-Druckkopf (10) nach Anspruch 1, wobei eine obere Vorderseite des Kopfrahmens (100) mit einem Spritzenbefestigungsteil (600) versehen ist, um die Spritze (200) zu fixieren.

6. Lokalerwärmungstyp-3D-Druckkopf (10) nach Anspruch 1, wobei die Spritze (200) an einem Bereich außer dem unteren Abschnitt der Spritze (200) mit einem Kühlteil (230) versehen ist, das hohe Wärme abführt, um ein Überhitzen der Spritze (200) zu verhindern.

7. Lokalerwärmungstyp-3D-Druckkopf (10) nach Anspruch 1, wobei der Lokalerwär-mungstyp-3D-Druckkopf (10) dazu eingerichtet ist, ein thermoplastisches Polymer in der Druckzusammensetzung (211) zu verwenden.

8. Lokalerwärmungstyp-3D-Druckkopf (10) nach Anspruch 1, wobei das Heizelement (400) Folgendes aufweist:
einen Heizblock (410), der an einer äußeren Umfangsfläche des unteren Abschnitts der Spritze (200) vorgesehen ist; und
mehrere Patronenheizer (420), die innerhalb des Heizblocks (410) vorgesehen sind, um Wärme zum Erhitzen der Spritze (200) zu übertragen.

9. Lokalerwärmungstyp-3D-Druckkopf (10) nach Anspruch 8, wobei die Patronenheizer (420) an derselben Position auf beiden Seiten der Spritze (200) angeordnet sind.

10. Lokalerwärmungstyp-3D-Druckkopf (10) nach Anspruch 1, wobei der Lokalerwär-mungstyp-3D-Druckkopf (10) des Weiteren ein Temperaturmesselement (500) aufweist, das an einer Seite des Heizelements (400) installiert ist, um die Temperatur der Spritze (200) zu messen.

## Revendications

1. Tête d'imprimante tridimensionnelle (3D) à chauffage local (10), l'imprimante 3D à chauffage local comprenant :
une monture de tête (100) ;
une seringue (200) pourvue sur la monture de tête (100) pour recevoir une composition d'impression (211) et pour éjecter la composition d'impression (211) à travers une partie de buse inférieure (220) ; et
une partie de chauffage (400) pourvue sur une surface périphérique externe de la partie inférieure de la seringue (200) pour chauffer localement la zone autour de la partie de buse (220) ;
**caractérisée en ce que** le fond de la partie de chauffage (400) comprend en outre une plaque de réglage de la partie de chauffage (700) installée pour envelopper une surface périphérique externe d'une partie de buse (220) afin de garantir une zone de chauffage minimale.

2. Tête d'imprimante 3D à chauffage local (10) selon la revendication 1, dans laquelle le dessus de la partie de chauffage (400) comprend en outre une plaque de réglage de la partie de chauffage (700) qui recouvre le fond de la seringue (200) et la partie de chauffage (400) afin de garantir une zone de chauffage minimale.

3. Tête d'imprimante 3D à chauffage local (10) selon la revendication 2, dans laquelle la plaque de réglage de la partie de chauffage (700) est disposée de manière amovible sur le dessus de la partie de chauffage (400), dans laquelle la plaque de réglage de la partie de chauffage (700) enveloppe la surface périphérique externe de la seringue (200) et la partie de chauffage (400).

4. Tête d'imprimante 3D à chauffage local (10) selon la revendication 2, dans laquelle l'épaisseur de la plaque de réglage de la partie de chauffage (700) est formée pour être inférieure ou égale à l'épaisseur de la partie de chauffage (400).

5. Tête d'imprimante 3D à chauffage local (10) selon la revendication 1, dans laquelle une face avant supérieure de la monture de tête (100) est pourvue d'une partie de fixation de seringue (600) pour fixer la seringue (200).

6. Tête d'imprimante 3D à chauffage local (10) selon la revendication 1, dans laquelle, partout sauf dans la partie inférieure de la seringue (200), la seringue (200) est pourvue d'une partie dissipateur thermique (230) qui dissipe la chaleur élevée pour empêcher une surchauffe de la seringue (200).

7. Tête d'imprimante 3D à chauffage local (10) selon la revendication 1, dans laquelle la tête d'imprimante 3D à chauffage local (10) est configurée pour utiliser un polymère thermoplastique dans la composition d'impression (211).

8. Tête d'imprimante 3D à chauffage local (10) selon la revendication 1, dans laquelle la partie de chauffage (400) comprend :
un bloc de chauffage (410) pourvu sur une surface périphérique externe de la partie inférieure de la seringue (200) ; et
une pluralité de dispositifs de chauffage de cartouche (420) pourvus à l'intérieur du bloc de chauffage (410) pour transférer la chaleur afin de chauffer la seringue (200).

9. Tête d'imprimante 3D à chauffage local (10) selon la revendication 8, dans laquelle les dispositifs de chauffage de cartouche (420) sont situés au même point de chaque côté de la seringue (200).

10. Tête d'imprimante 3D à chauffage local (10) selon la revendication 1, comprenant en outre une partie de mesure de température (500) installée sur le côté de la partie de chauffage (400) pour mesurer la température de la seringue (200).
